(19) Europäisches Patentamt / European Patent Office / Office européen des brevets

(11) **EP 2 031 252 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(51) Int Cl.:
*F04D 25/06* (2006.01)  *F04D 25/08* (2006.01)
*F04D 29/12* (2006.01)  *F16J 15/32* (2006.01)

(21) Anmeldenummer: **07115071.8**

(22) Anmeldetag: **28.08.2007**

(54) **Gebläse zum Fördern von Medien**

Fan for conveying media

Soufflante destinée à alimenter des milieux

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**04.03.2009 Patentblatt 2009/10**

(73) Patentinhaber: **ebm-papst Mulfingen GmbH & Co. KG**
**74673 Mulfingen (DE)**

(72) Erfinder:
• **Heli, Thomas, Dipl.-Ing.**
**74595 Langenburg (DE)**
• **Hofmann, Erich**
**74673 Mulfingen-Ailringen (DE)**
• **Rückert, Christian**
**97922 Lauda-Königshofen (DE)**

(74) Vertreter: **Patentanwälte**
**Dr. Solf & Zapf**
**Candidplatz 15**
**81543 München (DE)**

(56) Entgegenhaltungen:
EP-A- 1 152 176    EP-A- 1 464 879
EP-A- 1 681 498    WO-A-03/083330
DE-U1- 9 111 745

**Beschreibung**

Die vorliegende Erfindung betrifft ein Gebläse zum Fördern insbesondere von gasförmigen, aggressiven Medien, wie Heißgas, Rauchgas, Feuchtigkeit enthaltendes Gas oder dergleichen, mit einem Gehäuse mit einer Einlassöffnung, einer Ausblasöffnung, mit einem innerhalb des Gehäuses drehbar angeordneten Gebläserad sowie mit einem außerhalb des Gehäuses angeordneten Elektro-Antriebsmotor, wobei der Antriebsmotor über eine durch eine Durchführöffnung des Gehäuses geführte Antriebswelle mit dem Gebläserad verbunden ist, und im Bereich der Durchführöffnung des Gehäuses eine einen zwischen der Durchführöffnung und der Antriebswelle gebildeten Öffnungsspalt verschließende Dichtung angeordnet ist, und die Dichtung derart ausgebildet und auf einer Seite einer hinteren Stirnwandung des Gehäuses angeordnet ist, dass sie in ihrer den Öffnungsspalt verschließenden Stellung die Durchführöffnung umschließend und unter axialer Vorspannung an der hinteren Stirnwandung des Gehäuses dichtend anliegt.

Ein derartiges Gebläse ist beispielsweise in der Ausbildung als Radialgebläse aus dem deutschen Gebrauchsmuster G 9111745.3, das als nächstliegenden Stand der Technik angesehen wird, bekannt. Dieses Radialgebläse hat sich grundsätzlich in der Praxis bewährt. Jedoch hat sich herausgestellt, dass bei sehr hohen Temperaturen des zu fördernden Mediums Abdichtprobleme auftreten können.

Der vorliegenden Erfindung liegt die Aufgabe zu Grunde, ausgehend von einem gattungsgemäßen Gebläse dieses derart zu verbessern, dass bei einem exzentrischen Verlauf der Antriebswelle und/oder bei Fluchtungsfehlern derselben sowie bei sehr hohen Temperaturen eine sichere Abdichtung der Welle zum Gehäuse erreicht wird.

Erfindungsgemäß wird dies dadurch erreicht, dass das Dichtelement aus nicht elastomerem Material besteht und mittels eines Spannelementes zwischen diesem und der Stirnwandung kraftschlüssig fixiert ist. Hierbei ist das erfindungsgemäße Spannelement form- oder formkraftschlüssig zu der Stirnwandung angeordnet.

Erfindungsgemäß ist die Antriebswelle innerhalb der Dichtung schwimmend geführt, d. h., die Dichtung ist nicht, wie im Stand der Technik der eingangs genannten Art auf der Welle form- und/oder kraftschlüssig befestigt, sondern die Welle ist innerhalb der Dichtung drehbar gelagert. Somit sitzt erfindungsgemäß die Dichtung bei der Montage konzentrisch auf der Welle und Exzentrizitäten und Fluchtungsfehler werden erfindungsgemäß dadurch ausgeglichen, dass die Dichtung gegenüber dem Gehäuse mittels des Spannelementes nach der Montage der Dichtung auf der Welle fixiert wird. Hierbei sind das Dichtelement und das Spannelement derart dimensioniert, dass stets eine umfangsgemäße Abdichtung der Durchführöffnung sicher gewährleistet ist. Indem erfindungsgemäß das Dichtelement aus einem nicht elastomeren Material, insbesondere Polytetrafluorethylen hergestellt ist, können mit dem erfindungsgemäßen Gebläse Medien bei höchsten Temperaturen transportiert werden, ohne dass die Abdichtung der Welle gegenüber dem Gehäuse beeinträchtigt wird.

Weitere vorteilhafte Ausführungen der Erfindung sind in den Unteransprüchen enthalten.

An Hand des in den beiliegenden Zeichnungen dargestellten Ausführungsbeispiels wird die Erfindung näher erläutert. Es zeigen:

Fig. 1    eine Seitenansicht eines erfindungsgemäßen Gebläses, zum Teil geschnitten,

Fig. 2a   eine Detailansicht des Ausschnittes II in Fig. 1, jedoch vor dem Montieren der erfindungsgemäßen Dichtung und

Fig. 2b   eine Detailansicht des Ausschnittes III in Fig. 2a,

Fig. 3    eine Detailansicht des Ausschnittes II in Fig. 1,

Fig. 4    eine Detailansicht des Ausschnittes II in Fig. 1, mit exzentrischem Verlauf der Antriebswelle, vor der Montage der erfindungsgemäßen Dichtung,

Fig. 5    eine Detailansicht des Ausschnittes II in Fig. 1 mit exzentrischem Verlauf der Antriebswelle.

In den einzelnen Figuren sind gleiche Teile stets mit denselben Bezugsziffern gekennzeichnet.

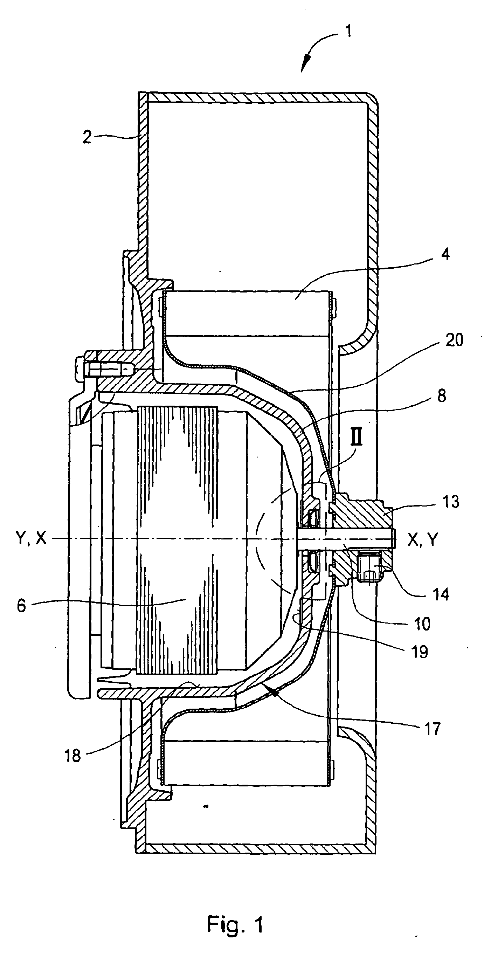

Ein erfindungsgemäßes Gebläse 1, insbesondere Radialgebläse, besteht, siehe Fig. 1, aus einem Gehäuse 2, einem innerhalb des Gehäuses 2 drehbar angeordneten Gebläserads 4 und einem außerhalb des Gehäuses 2 angeordneten elektrischen Antriebsmotor 6. Das Gehäuse 2, das beispielsweise als Spiralgehäuse ausgebildet sein kann, weist eine Umfangswandung, eine vordere Stirnwand und eine hintere Stirnwandung 8 auf. Eine Antriebswelle 10 des außerhalb des Gehäuses 2 auf der Seite der hinteren Stirnwandung 8, d. h. auf der einer Einlassöffnung des Gebläses 1 abgekehrten Seite, angeordneten Motors 6 erstreckt sich durch eine Durchführöffnung 12 der hinteren Stirnwandung 8 hindurch in das Gehäuse 2 hinein und ist hier über eine Nabe 13 mit dem Gebläserad 4 drehfest verbunden, beispielsweise lösbar über eine Nabenschraube 14 der Nabe 13.

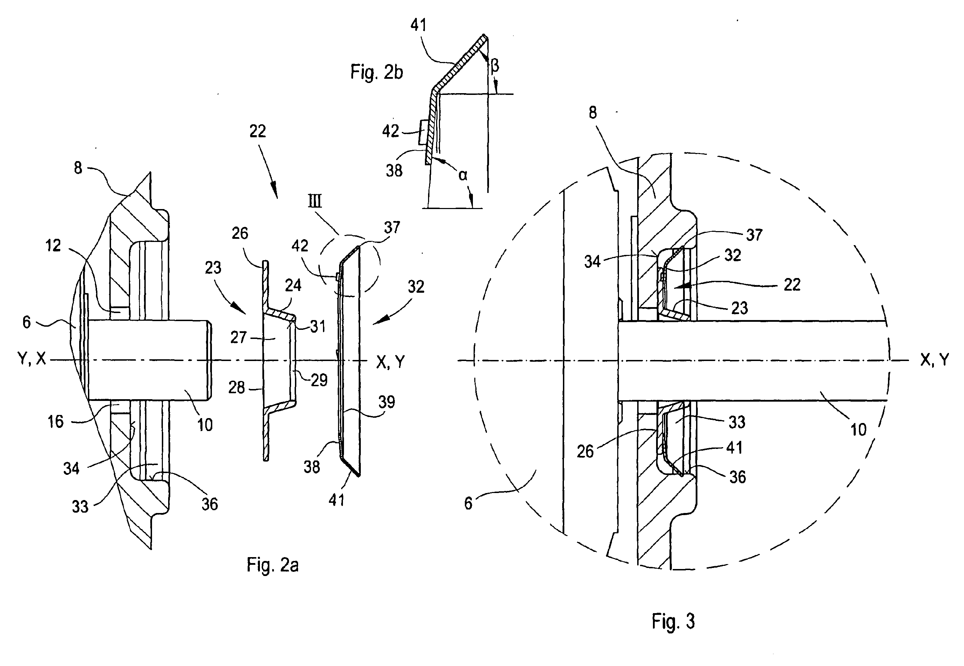

Die insbesondere kreisförmige Durchführöffnung 12, siehe Fig. 2a, besitzt einen größeren Durchmesser bzw. eine größere lichte Weite als der Durchmesser der Antriebswelle 10, so dass zwischen der Antriebswelle 10 und der Durchführöffnung 12 ein insbesondere ringförmiger Öffnungsspalt 16 ausgebildet ist. Um das erfindungsgemäße Gebläse1 in Hinsicht seiner axialen Bauweise möglichst klein und kompakt zu halten, besitzt die hintere Stirnwandung 8 zur zumindest teilweisen Aufnahme des Motors 6 einen sich in das Gehäuse 2, d. h. in Richtung der vorderen Stirnwandung des Gehäuses 2 erstreckende, topfförmige Einbuchtung 17 mit einem im Wesentlichen zylindrischen Wandungsabschnitt 18 und einem zur Welle senkrechten Bodenabschnitt 19, wobei die Durchführöffnung 12 im Bereich dieses Bodenabschnittes 19 ausgebildet ist, siehe Fig. 1. Die Einbuchtung 17 ist hinsichtlich ihrer Innenkontur derart an die Außenkontur des Antriebsmotors 6 angepasst, dass zwischen Letzterem und der Einbuchtung 17 ein schmaler Spalt umfangsgemäß ausgebildet ist. Auf Grund der Einbuchtung 17 ist auch eine Laufradronde 20 topfförmig ausgebildet, wobei sie derart an die dem Gehäuse 2 im Innern zugekehrte Kontur der Einbuchtung 17 angepasst ist, dass sie Letztere mit geringem Zwischenraum umschließt.

Wie insbesondere den Fig. 2a und 3 zu entnehmen ist, ist erfindungsgemäß im Bereich der Durchführöffnung 12 der hinteren Stirnwandung 8 bzw. des Bodenabschnittes 19 der Einbuchtung 17 eine Dichtung 22 angeordnet, welche derart ausgebildet ist, dass der zwischen der Durchführöffnung 12 und der Antriebswelle 10 gebildete Öffnungsspalt 16 verschlossen bzw. abgedichtet ist.

Der Aufbau der erfindungsgemäßen Dichtung 22 ist in Fig. 2a im Einzelnen dargestellt. Hierbei stellt Fig. 2a die erfindungsgemäße Dichtung 22 vor der Montage auf der Antriebswelle 10 dar.

Eine erfindungsgemäße Dichtung 22 besteht aus einem Dichtelement 23 aus nicht elastomerem Material. Insbesondere ist als Material für das Dichtelement 23 Polytetrafluorethylen geeignet, das hitzebeständig ist. Somit handelt es sich um ein nicht flexibles Dichtelement 23. Das Dichtelement 23 ist im Wesentlichen flanschförmig ausgebildet. Es besitzt einen mittleren Konuskörper 24. An diesem Konuskörper 24 ist einendig ein Anlagebund 26 angeformt. Der Konuskörper 24 besitzt eine innere Durchgangsöffnung 27, deren Eintrittsöffnung 28 einen größeren Durchmesser aufweist, als dessen Austrittsöffnung 29. Somit verengt sich die Durchgangsöffnung 27 konisch von der Eintrittsöffnung 28 zur Austrittsöffnung 29. Die Eintrittsöffnung 28 und die Austrittsöffnung 29 sind in ihrer lichten Weite bzw. in ihrem Durchmesser derart an den Durchmesser der Antriebswelle 10 angepasst, dass der Durchmesser der Eintrittsöffnung 28 größer als der Durchmesser der Antriebswelle 10 ist und der Durchmesser der Austrittsöffnung 29 etwa gleich groß ist wie der Durchmesser der Antriebswelle 10. Im Bereich der Austrittsöffnung 29 weist der Konuskörper 24 an seinem inneren Wandbereich eine kreiszylindrische Dichtfläche 31 auf. Im Bereich dieser Dichtfläche 31 erfolgt eine umfangsgemäße Abdichtung der Antriebswelle 10 mittels des Dichtelements 23, wenn dieses auf die Antriebswelle 10 aufgeschoben ist, wie dies in Fig. 1, Fig. 3 und Fig. 5 zu erkennen ist. Durch die Ausbildung der inneren konischen Durchgangsöffnung 27 ist ein leichtes Aufschieben des Dichtelements 23 auf die Antriebswelle 10 möglich und zudem können gewisse Schrägstellungen der Antriebswelle 10 hierdurch ausgeglichen werden. Im aufgeschobenen Zustand des Dichtelements 23 liegt dieses mit seinem Anlagebund 26 an der hinteren Stirnwandung 8 des Gehäuses 2 an. Der Durchmesser der Antriebswelle 10 und der Innendurchmesser der Durchgangsöffnung 27 im Bereich der Dichtfläche 31 sind derart aufeinander abgestimmt, dass im aufgeschobenen Zustand des Dichtelementes 23 auf der Antriebswelle 10 eine Umfangsdichtung zwischen beiden Teilen stets gewährleistet ist.

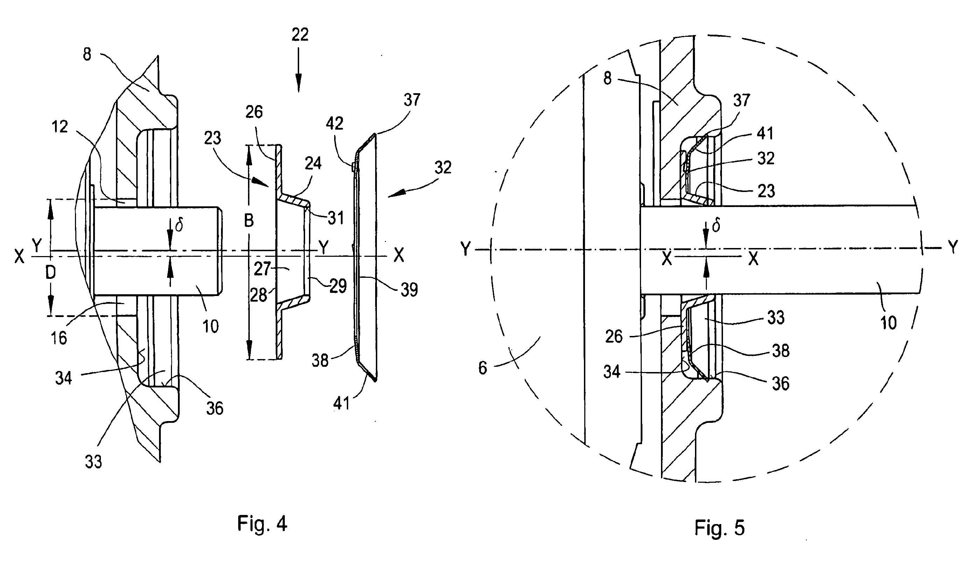

Der Anlagebund 26 liegt in der Öffnungsebene der Eintrittsöffnung 28 und wird, siehe Fig. 2a, 3, mittels eines Spannelementes 32, das ebenfalls Bestandteil der erfindungsgemäßen Dichtung 22 ist, innerhalb einer Gehäuseaufnahme 33, die konzentrisch zur Durchführöffnung 12 in der Stirnwandung 8 ausgebildet ist, zumindest kraftschlüssig fixiert. Hierbei übt das in die Gehäuseaufnahme 33 eingesetzte Spannelement 32 gleichzeitig auch eine axiale Kraft auf das Dichtelement 23 aus, so dass dieses unter elastischer Vorspannung fixiert ist. Die Gehäuseaufnahme 33 besitzt einen vorzugsweise kreisförmigen Aufnahmegrund 34 und einen Umfangswandbereich 36, wobei der insbesondere unbearbeitet sein kann. Das Spannelement 32 ist derart dimensioniert, dass es im montierten Zustand mit seinem Umfangsrand 37 im Bereich des Umfangswandbereiches 36 der Gehäuseaufnahme 33 der hinteren Stirnwandung 8 kraft- oder kraftformschlüssig verbunden ist. Das Spannelement 32 ist hierzu vorteilhafterweise tellerfederartig ausgebildet und besteht aus federelastischem Material, insbesondere aus Federstahl. Das Spannelement 32 besitzt einen inneren Ringbereich 38 mit einer Durchtrittsöffnung 39, deren Durchmesser größer ist als der Durchmesser der Durchführöffnung 12 des Gehäuses 2 und kleiner ist als der Außendurchmesser des Anlagebundes 26 des Dichtelementes 23. Weiterhin weist das Spannelement 32 einen äußeren, sich an den inneren Ringbereich 38 anschließenden äußeren Ringabschnitt 41 auf. Der innere Ringbereich 38 verläuft im nicht montierten Zustand des Spannelementes 32 (wie in Fig. 2b dargestellt) unter einem spitzen Winkel $\alpha$ schräg zur Mittelachse X-X des Spannelementes 32 und der äußere Ringabschnitt 41 ist derart geneigt ausgebildet, dass er zu einer mit der Mittelachse X-X parallel verlaufenden Linie einen spitzen Winkel $\beta$ einschließt, der flacher, d. h. kleiner ist als der Winkel $\alpha$ des inneren Ringbereichs 38. Durch diese Ausbildung des Spannelementes 32 wird die Tellerfederfunktion gewährleistet und in dem Zustand, wenn das Spannelement 32 in die Gehäuseaufnahme 33 eingedrückt ist, siehe Fig. 3, 5, verkrallt sich der Umfangsrand 37 des äußeren Ringabschnitts 41 in den Umfangswandbereich 36 der Gehäuseaufnahme 33, so dass eine kraftformschlüssige Verbindung zwischen diesen beiden Teilen entsteht, die dadurch begünstigt wird, dass der Umfangswandbereich 36 unbearbeitet ist. Durch das Eindrücken des Spannelementes 32 in die Gehäuseaufnahme 33 gegen den Anlagebund 26 des Dichtelementes 23, das auf die Antriebswelle 10 aufgeschoben ist, erfolgt eine axiale Verbiegung des inneren Ringbereiches 38, so dass gegen das Dichtelement 23 eine axiale Kraft ausgeübt wird und somit dieses Dichtelement 23 im Bereich des Anlagebundes 26 unter einer Vorspannung steht und gegen die Stirnwandung 8 gepresst wird, wie dies in Fig. 3 dargestellt ist.

Die Montage der erfindungsgemäßen Dichtung 22 erfolgt, nachdem zunächst der Antriebsmotor 6 befestigt worden ist und die Antriebswelle 10 somit durch die Durchführöffnung 12 hindurch verläuft und aus dieser hervorragt. Auf die Antriebswelle 10 wird zuerst das Dichtelement 23 soweit aufgeschoben, bis der Anlagebund 26 an dem Aufnahmegrund 34 anliegt. In Fig. 2a verläuft die Antriebswelle 10 mittig durch die Durchführöffnung 12, wobei das Dichtelement 23 zur Antriebswelle 10 zentriert montiert ist und der Anlagebund 26 ebenfalls zentrisch zur Mittelachse X-X der Durchführöffnung 12 angeordnet ist.

Für den Fall, dass die Längsachse Y-Y der Antriebswelle 10, wie in Fig. 4 und Fig. 5 gezeigt, nicht mit der Mittelachse X-X der Durchführöffnung 12 zusammenfällt, sondern um einen Versatz δ versetzt ist, ist auch das auf der Antriebswelle 10 aufgeschobene Dichtelement 23 um diesen Versatz δ gegenüber der Durchführöffnung 12 versetzt. Da aber der Anlagebund 26 einen Außendurchmesser bzw. eine Gesamtbreite B besitzt, der bzw. die größer ist als die Summe aus dem Durchmesser D der Durchführöffnung 12 und dem zweifachen, maximal möglichen Versatz $\delta_{max}$ entsprechend

$$B > D + 2x\ \delta_{max}$$

ist gewährleistet, dass der Anlagebund 26 in jeder möglichen Montagestellung der Antriebswelle 10 an dem Aufnahmegrund 34 anliegen kann.

Nach der Montage des Dichtelementes 23 wird das Spannelement 32 auf die Antriebswelle 10 aufgeschoben und in die Gehäuseaufnahme 33 eingedrückt, bis das Spannelement 32 mit seinem inneren Ringbereich 38 unter axialer Verformung desselben an dem Anlagebund 26 anliegt, so dass eine axiale Vorspannung erzeugt wird, mit der der Anlagebund 26 zwischen der Rückwand 8 und dem Spannelement 32 eingespannt wird. Im eingedrückten Zustand des Spannelementes 32 verkrallt sich dessen äußerer Ringabschnitt 41 mit dem Umfangsrand 37 in dem Umfangsrandbereich 36 der Gehäuseaufnahme 33, wobei der äußere Ringabschnitt 41 durch die beim Eindrücken erfolgte radiale Verbiegung im eingedrückten Zustand unter einer radialen Vorspannung steht. Somit ist im montierten Zustand des Spannelementes 32 das Dichtelement 23 innerhalb der Gehäuseaufnahme 33 fixiert und die Antriebswelle 10 ist demgemäß innerhalb des Dichtelementes 23 drehbar und somit "schwimmend" geführt. Zur besseren Verbindung des Spannelementes 32 mit dem Dichtelement 23 kann das Spannelement 32 im Bereich seines inneren Ringsbereichs dem Dichtelement 23 zugekehrt ausgestanzte und gebogene Zungen 42 aufweisen, mit denen ein Formschluss mit dem Dichtelement 23 im eingedrückten Zustand des Spannelementes 32 erzeugt wird, siehe Fig. 2b.

Vorteilhafterweise besitzen das Dichtelement 23 sowie das Spannelement 32 eine kreisförmige Umfangskontur, und zwar in Anpassung an die Form der Gehäuseaufnahme 33 sowie der Durchführöffnung 12. Jedoch es liegt ebenfalls im Rahmen der Erfindung, andere Umfangskonturen dieser vorstehenden Elemente vorzusehen.

Die vorliegende Erfindung ist nicht auf das gezeigte Ausführungsbeispiel beschränkt, sondern umfasst alle im Sinne der Erfindung gleichwirkende Mittel.

Im Übrigen wird im vollen Umfange, was die Ausbildung des Gebläses betrifft, auf den Inhalt des deutschen Gebrauchsmusters G 9111745.3 verwiesen. Insbesondere darauf, dass es sich bei dem verwendeten Antriebsmotor um einen Außenläufermotor handelt.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Gebläse zum Fördern insbesondere von gasförmigen, aggressiven Medien, wie Heißgas, Rauchgas, Feuchtigkeit enthaltendes Gas oder dergleichen, mit einem Gehäuse (2) mit einer Einlassöffnung und einer Ausblasöffnung, mit einem innerhalb des Gehäuses (2) drehbar angeordneten Gebläserad (4) sowie mit einem außerhalb des Gehäuses (2) angeordneten Elektro-Antriebsmotor (6), wobei der Antriebsmotor (6) über eine durch eine Durchführöffnung (12) des Gehäuses (2) geführte Antriebswelle (10) mit dem Gebläserad (4) verbunden ist und im Bereich der Durchführöffnung (12) des Gehäuses (2) eine einen zwischen der Durchführöffnung (12) und der Antriebswelle (10) gebildeten Öffnungsspalt (16) verschließende Dichtung (22) angeordnet ist und die Dichtung (22) derart ausgebildet und auf einer Seite einer hinteren Stirnwandung (8) des Gehäuses (2) angeordnet ist, dass sie in ihrer den Öffnungsspalt (16) verschließenden Stellung die Durchführöffnung (12) umschließend unter axialer Vorspannung an der hinteren Stirnwandung (8) des Gehäuses (2) dichtend anliegt,
**dadurch gekennzeichnet, dass** die Dichtung (22) ein Dichtelement (23) aus nicht elastomerem Material aufweist sowie ein Spannelement (32), mit dem das Dichtelement (23) zwischen dem Spannelement (32) und der Stirnwandung (8) kraftschlüssig fixiert ist, wobei im montierten Zustand der aus Dichtelement (23) und Spannelement (32) gebildeten Dichtung (22) die Antriebswelle (10) in der Dichtung (22) schwimmend geführt ist und wobei das Dichtelement (23) einen Anlagebund (26) aufweist, der in der Öffnungsebene ihrer Eintrittsöffnung (28) liegt und sich von deren Umfangsrand radial nach außen erstreckt und derart bemessen ist, dass im montierten Zustand eine dichtende Anlage an der Stirnwandung (8) im Bereich um ihre Durchführöffnung (12) herum gewährleistet ist, wobei der Anlagebund (26) einen Außendurchmesser bzw. eine Gesamtbreite (B) besitzt, der bzw. die größer ist als die Summe aus dem Durchmesser (D) der Durchführöffnung (12) und einem zweifachen, maximal möglichen Versatz ($\delta_{max}$) der Antriebswelle (10) zur Mittelachse (X-X) in der Durchführöffnung (12), d. h. B>D+2x $\delta_{max}$.

2.  Gebläse nach Anspruch 1,
    **dadurch gekennzeichnet, dass** das Spannelement (32) form- oder formkraftschlüssig mit der Stirnwandung (8) verbunden ist.

3.  Gebläse nach Anspruch 2,
    **dadurch gekennzeichnet, dass** die Stirnwandung (8) eine der die Durchführöffnung (12) umgebene Gehäuseaufnahme (33) mit einem Aufnahmegrund (34) und einem Umfangswandbereich (36) besitzt und das Spannelement (32) derart dimensioniert ist, dass es im montierten Zustand mit dem Umfangsrand (37) der Gehäuseaufnahme (33) kraft- und/ oder kraftformschlüssig verbunden ist.

4.  Gebläse nach einem der Ansprüche 2 oder 3,
    **dadurch gekennzeichnet, dass** das Spannelement (32) tellerfederartig ausgebildet ist und aus federelastischem Material, insbesondere Federstahl besteht.

5.  Gebläse nach einem der Ansprüche 1 bis 4,
    **dadurch gekennzeichnet, dass** das Spannelement (32) aus einem inneren Ringbereich (38) mit einer Durchtrittsöffnung (39) besteht, der unter einem spitzen Winkel ($\alpha$) schräg zur Mittelachse (X-X) der Durchtrittsöffnung (39) verläuft sowie aus einem äußeren Ringabschnitt (41), der gegenüber dem inneren Ringbereich (38) abgewinkelt ist und mit einer zur Mittelachse (X-X) parallel verlaufenden Linie einen spitzen Winkel ($\beta$) einschließt, der kleiner ist als der Winkel ($\alpha$).

6.  Gebläse nach einem der Ansprüche 1 bis 5,
    **dadurch gekennzeichnet, dass** das Dichtelement (23) flanschförmig ausgebildet ist und einen mittleren Konuskörper (24) aufweist, mit einer sich konisch verengenden Durchgangsöffnung (27), die eine Eintrittsöffnung (28) und eine Austrittsöffnung (29) aufweist, wobei die Eintrittsöffnung (28) einen Durchmesser besitzt, der größer als der Durchmesser der Antriebswelle (10) ist und die Austrittsöffnung (29) einen Durchmesser aufweist, der dem Durchmesser der Antriebswelle (10) entspricht, wobei zwischen der Antriebswelle (10) und dem Dichtelement (23) im Bereich der Austrittsöffnung (29) eine Umfangsdichtung ausgebildet ist.

7.  Gebläse nach einem der Ansprüche 1 bis 6,
    **dadurch gekennzeichnet, dass** der Konuskörper (24) des Dichtelementes (23) im Bereich der Umfangsrichtung zur Antriebswelle (10) eine innere kreiszylindrische Dichtfläche (31) aufweist.

8.  Gebläse nach einem der Ansprüche 1 bis 7,
    **dadurch gekennzeichnet, dass** die Öffnungsweite der Durchtrittsöffnung (39) des Spannelementes (32) derart bemessen ist, dass im montierten Zustand des Spannelementes (32) der Anlagebund (26) des Dichtelementes (23) zwischen dem Spannelement (32) im Bereich dessen inneren Ringbereichs (38) und der Stirnwandung (8) fixiert ist.

9.  Gebläse nach einem der Ansprüche 1 bis 8,
    **dadurch gekennzeichnet, dass** der innere Ringbereich (38) des Spannelementes (32) radial abstehende Zungen (42) besitzt, die im montierten Zustand des Spannelementes (32) einen Formschluss mit dem Dichtelement (23) erzeugen.

10. Gebläse nach einem der Ansprüche 1 bis 9,
    **dadurch gekennzeichnet, dass** das Dichtelement (23) aus Polytetrafluorethylen besteht.

**Claims**

1.  A fan for conveying media, in particular gaseous, aggressive media, such as hot gas, flue gas, moisture-containing gas or the like, with a housing (2) with an inlet opening and a blow-out opening, with a fan wheel (4) arranged inside the housing (2) so as to be rotatable and with an electric drive motor (6) arranged outside the housing (2), wherein the drive motor (6) is connected to the fan wheel (4) by way of a drive shaft (10) passing through a through-opening (12) in the housing (2), and a seal (22) closing an opening gap (16) formed between the through-opening (12) and the drive shaft (10) is arranged in the region of the through-opening (12) in the housing (2), and the seal (22) is designed and arranged on one side of a rear end wall (8) of the housing (2) in such a way that in its position closing the opening gap (16) it rests in a sealing manner against the rear end wall (8) of the housing (2) with axial pre-stressing so as to surround the through-opening (12), **characterized in that** the seal (22) has a sealing element (23) of a non-elastomer material as well as a clamping element (32) by which the sealing element (23) is fixed in a non-positively locking manner between the clamping element (32) and the end wall (8), wherein in the assembled state of the seal (22) formed from the sealing element (23) and the clamping element (32) the drive shaft (10) is guided in a floating manner in the seal (22) and wherein the sealing element (23) has an abutment collar (26) which is situated in the opening plane of the entry opening (28) thereof and extends radially outwards from the peripheral edge thereof and which is dimensioned in such a way that in the assembled state a sealing abutment against the end wall (8) is provided in the region around the through-opening (12) thereof, wherein the abutment collar (26) has an external diameter or an overall width **(B)** which is larger than the sum of the diameter (D) of the through-opening (12) and twice the maximum possible offset ($\delta_{max}$) of the drive shaft (10) with respect to the central axis **(X-X)** in the through-opening (12), *i.e.* **B > D + 2 ×** $\delta_{max}$.

2. A fan according to Claim 1, **characterized in that** the clamping element (32) is connected in a positively or non-positively locking manner to the end wall (8).

3. A fan according to Claim 2, **characterized in that** the end wall (8) has a housing-receiving means (33) surrounding the through-opening (12) and having a receiving base (34) and a peripheral wall region (36), and the clamping element (32) is dimensioned in such a way that in the assembled state it is connected in a non-positively and/or positively locking manner to the peripheral wall (37) of the housing-receiving means (33).

4. A fan according to one of Claims 2 or 3, **characterized in that** the clamping element (32) is designed in the form of a plate spring and comprises spring-resilient material, in particular spring steel.

5. A fan according to any one of Claims 1 to 4, **characterized in that** the clamping element (32) comprises an inner annular region (38), which has a passage opening (39) and which extends at an acute angle ($\alpha$) obliquely to the central axis **(X-X)** of the passage opening (39), and an outer annular portion (41), which is angled with respect to the inner annular region (38) and forms an acute angle ($\beta$), which is smaller than the angle ($\alpha$), with a line extending parallel to the central axis (X-X).

6. A fan according to any one of Claims 1 to 5, **characterized in that** the sealing element (23) is constructed in the manner of a flange and has a central cone member (24), with a through-opening (27) which is tapered in a conical manner and which has an entry opening (28) and an exit opening (29), wherein the entry opening (28) has a diameter which is larger than the diameter of the drive shaft (10) and the exit opening (29) has a diameter which corresponds to the diameter of the drive shaft (10), wherein a peripheral seal is formed between the drive shaft (10) and the sealing element (23) in the region of the exit opening (29).

7. A fan according to any one of Claims 1 to 6, **characterized in that** the cone member (24) of the sealing element (23) has an internal cylindrical sealing face (31) in the region of the peripheral seal of the drive shaft (10).

8. A fan according to any one of Claims 1 to 7, **characterized in that** the opening width of the passage opening (39) of the clamping element (32) is dimensioned in such a way that in the assembled state of the clamping element (32) the abutment collar (26) of the sealing element (23) is fixed between the clamping element (32) in the region of the inner annular region (38) of the latter and the end wall (8).

9. A fan according to any one of Claims 1 to 8, **characterized in that** the inner annular region (38) of the clamping element (32) has tongues (42) which project radially and which produce a positive locking with the sealing element (23) in the assembled state of the clamping element (32).

10. A fan according to any one of Claims 1 to 9, **characterized in that** the sealing element (23) comprises polytetrafluoroethylene.

**Revendications**

1. Pulseur pour refouler en particulier des fluides gazeux agressifs, tels que des gaz chauds, des fumées, des gaz contenant de l'humidité ou similaire, comportant un carter (2) avec une ouverture d'admission et une ouverture d'évacuation, comportant une roue (4), montée rotative à l'intérieur du carter (2), et comportant un moteur d'entraînement électrique (6), monté à l'extérieur du carter (2), ledit moteur d'entraînement (6) étant relié à la roue (4) du pulseur par l'intermédiaire d'un arbre d'entraînement (10), guidé à travers un passage (12) du carter (2), et une garniture d'étanchéité (22), obturant une fente (16) formée entre le passage (12) et l'arbre d'entraînement (10), est posée dans la zone du passage (12) du carter (2), et ladite garniture d'étanchéité (22) est réalisée et disposée sur une face d'une paroi frontale (8) arrière du carter (2), de telle sorte que, dans sa position obturant la fente (16), elle entoure le passage (12) et, moyennant une précontrainte axiale, est en appui étanche contre la paroi frontale (8) arrière du carter (2), **caractérisé en ce que** la garniture d'étanchéité (22) comporte un élément d'étanchéité (23) en matériau non élastomère, et un élément de serrage (32), par lequel l'élément d'étanchéité (23) est fixé par force entre l'élément de serrage (32) et la paroi frontale (8), sachant que dans la position montée de la garniture d'étanchéité (22) formée par l'élément d'étanchéité (23) et l'élément de serrage (32), l'arbre d'entraînement (10) est guidé par guidage flottant dans la garniture d'étanchéité (22), et l'élément d'étanchéité (23) comporte une bride d'appui (26), qui se situe dans le plan de son orifice d'entrée (28) et s'étend radialement vers l'extérieur depuis le bord périphérique de celui-ci et est dimensionnée de telle sorte que, dans la position montée, un appui étanche contre la paroi frontale (8) est garanti dans la zone tout autour de son passage (12), la bride d'appui (26) ayant un diamètre extérieur ou une largeur totale (B) qui est supérieure à la somme formée par le diamètre (D) du passage (12) et un double décalage ($\delta_{max}$) possible au maximum de l'arbre d'entraînement (10) par rapport à l'axe médian (X-X) dans le passage (12), c'est-à-dire que B > D + 2 x $\delta_{max}$.

2. Pulseur selon la revendication 1, **caractérisé en ce que** l'élément de serrage (32) est assemblé par conjugaison de forme ou par force et conjugaison de forme à la paroi frontale (8).

3. Pulseur selon la revendication 2, **caractérisé en ce que** la paroi frontale (8) comporte un logement (33), entourant le passage (12) et muni d'un fond (34) et d'une zone de paroi périphérique (36), et l'élément de serrage (32) est dimensionné de telle sorte que, dans la position montée, il est assemblé par force ou par conjugaison de forme et force avec le bord périphérique (37) du logement (33).

4. Pulseur selon la revendication 2 ou 3, **caractérisé en ce que** l'élément de serrage (32) est conçu en forme de ressort Belleville et est réalisé en matériau élastiquement flexible, en particulier un acier ressort.

5. Pulseur selon l'une quelconque des revendications 1 à 4, **caractérisé en ce que** l'élément de serrage (32) est formé par une partie annulaire intérieure (38) avec un passage (39), qui est orienté en biais, en formant un angle ($\alpha$) aigu avec l'axe médian (X-X) du passage (39), et par une partie annulaire extérieure (41), qui est pliée par rapport à la partie annulaire intérieure (38) et forme avec une ligne parallèle à l'axe médian (X-X) un angle ($\beta$) aigu qui est

inférieur à l'angle ($\alpha$).

6. Pulseur selon l'une quelconque des revendications 1 à 5, **caractérisé en ce que** l'élément d'étanchéité (23) est réalisé en forme de collerette et comporte un corps conique (24) central avec un passage (27) se rétrécissant en cône, qui comporte un orifice d'entrée (28) et un orifice de sortie (29), l'orifice d'entrée (28) ayant un diamètre supérieur au diamètre de l'arbre d'entraînement (10) et l'orifice de sortie (29) ayant un diamètre qui correspond au diamètre de l'arbre d'entraînement (10), une garniture d'étanchéité périphérique étant réalisée dans la zone de l'orifice de sortie (29) entre l'arbre d'entraînement et l'élément d'étanchéité (23).

7. Pulseur selon l'une quelconque des revendications 1 à 6, **caractérisé en ce que** le corps conique (24) de l'élément d'étanchéité (23) comporte une surface d'étanchéité (31) cylindrique circulaire, dans la zone de la garniture d'étanchéité périphérique par rapport à l'arbre d'entraînement (10).

8. Pulseur selon l'une quelconque des revendications 1 à 7, **caractérisé en ce que** la largeur du passage (39) de l'élément de serrage (32) est dimensionnée de telle sorte que, dans la position montée de l'élément de serrage (32), la bride d'appui (26) de l'élément d'étanchéité (23) est fixée entre l'élément de serrage (32), dans la zone de sa partie annulaire intérieure (38), et la paroi frontale (8).

9. Pulseur selon l'une quelconque des revendications 1 à 8, **caractérisé en ce que** la partie annulaire intérieure (38) de l'élément de serrage (32) comporte des languettes (42) radialement en saillie qui, dans la position montée de l'élément de serrage (32), génèrent un assemblage par conjugaison de forme avec l'élément d'étanchéité (23).

10. Pulseur selon l'une quelconque des revendications 1 à 9, **caractérisé en ce que** l'élément d'étanchéité (23) est réalisé en polytetrafluoréthylène.

Fig. 1

Fig. 2b

Fig. 2a

Fig. 3

EP 2 031 252 B1

Fig. 5

Fig. 4

EP 2 031 252 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE G9111745